# EUROPEAN PATENT APPLICATION

(11) **EP 4 796 716 A1**
(43) Date of publication of application: **26.08.2026**
(21) Application number: 25159094.9
(22) Date of filing: 20.02.2025
(51) Int. Cl.: E02F 9/16, B62D 33/063, B62D 33/067, B62D 33/073, E02F 9/02

(54) **MECHANISM FOR MOVABLY MOUNTING AN UPPER STRUCTURE OF AN OFF-ROAD VEHICLE WITH RESPECT TO A CHASSIS OF THE OFF-ROAD VEHICLE**

(71) Applicant: Deere & Company, Moline, IL 61265 (US)
(72) Inventor: VALKAMA, PEETU, 68163 Mannheim (DE)
(74) Representative: Holst, Sönke

(57) **Abstract**

A mechanism (26) for movably mounting an upper structure of an off-road vehicle (10) with respect to a chassis (12) of the off-road vehicle (10) comprises:
a first part (22) connectable or connected to the chassis (12) or to the upper structure,
a second part (24) connectable or connected to the upper structure or to the chassis (12),
a first linear actuator (82) connected by spherical joints 74, 76) to the first part (22) and the second part (24), respectively and a second linear actuator (80) connected by spherical joints (74, 76) to the first part (22) and the second part (24), respectively, the first and second actuator (82, 80) spaced in a first direction (32),
a third linear actuator (78) connected by spherical joints (74, 76) to the first part (22) and the second part (24), respectively, spaced from the first and second actuator (82, 80) in a second direction (30) transverse to the first direction (32),
a first link (64) with a fixed length, connected between the first part (22) and the second part (24), configured to pivot on a first end (70) only around an axis extending parallel to the first direction (32) and connected with its second end by a spherical joint (68),
and a second link (86) connected to the first part (22) and the second part (24), the second link (86) restricting rotation of the second part (24) against the first part (22) within the plane spanned by the first and second direction (32, 30).

## Description

The present invention is related to a mechanism for movably mounting an upper structure of an off-road vehicle with respect to a chassis of the off-road vehicle.

### Prior Art

Off-road vehicles are designed to operate on un-even ground. This means that the ground does not need to be flat, but can be sloped such the vehicle contacts, with its ground engaging means, a surface that can be sloped in two directions (lateral and forward). The ground engaging means of the vehicle can thus be in a plane with a roll angle in the lateral direction and a pitch angle in the forward direction. An example for such off-road vehicles can be forestry vehicles, like harvesters and forwarders, however agricultural and construction vehicles, like tractors and excavators, may also need to be operated on such ground. Forest terrain, agricultural fields and construction sites are in many cases uneven and do usually not form a homogeneous surface.

In the prior art, off-road vehicles have been provided with a chassis comprising the ground engaging means and an upper structure that can be adjusted with respect to the chassis in at least one direction. The upper structure can comprise (only) an operator cabin or (also) comprise work elements, like a boom of an excavator. Between the chassis and the upper structure of the off-road vehicle, a position-adjustable mechanism is provided. This mechanism allows to keep the upper structure of the off-road vehicle oriented in a certain position, in particular in a levelled position with respect to gravity and/or provides dampening for the upper structure.

For example, reference is made to the prior art described in EP 0 994 009 A1, in which a mechanism with four actuators is provided between the chassis and the four corners of a cabin of a tractor, all actuators adjusting the vertical position of the respective corner of the cabin with respect to the chassis. Here, the actuators do not only provide the vertical forces for the cabin, but also need to accommodate the horizontal forces. Since the actuators are only movable in a vertical direction with respect to the chassis (when the latter is oriented exactly horizontal), elastic elements are provided between the actuators and the cabin, absorbing horizontal movement between the upper end of the actuator and the cabin. This mechanism is thus only suited for small angular adjustments. Also, this mechanism suffers from safety problems, since in case of roll-over or collision, the cylinders need to absorb the entire energy.

Other mechanisms have been described for example in WO 99/01329 A1, EP 2 058 438 A2 and US 2009/0152025 A1 in which an intermediate part is provided between a lower part connected to the chassis and an upper part connected to the cabin. The intermediate part is pivoted to the lower part around a first, horizontal tilt axis and pivoted to the upper part around a second, horizontal tilt axis enclosing an angle of 90° with the first tilt axis. The angles around both tilt axes are controlled by two actuators for each axis, respectively.

WO 94/16155 A1 shows another mechanism for tilting an upper structure of an off-road vehicle with respect to the chassis, also comprising an intermediate part provided between a lower part connected to the chassis and an upper part connected to the upper structure. The intermediate part is connected with its rear end to the lower part by a spherical bearing and on its forward end, the intermediate part is pivoted around a forward axis to the lower part. The upper part is pivoted around a transverse axis to the intermediate part at its forward end and at its rear end, it is connected to a cylinder adjusting the vertical position of the rear end of the upper part. The lateral inclination of the upper part is adjusted by two counter-acting cylinders pivoting the intermediate part around the forward axis. The purpose of the intermediate part is to transfer horizontal forces from the intermediate part to the lower part, taking horizontal forces away from the pivot pin of the intermediate part. The intermediate part thus pivots only around a forward axis with respect to the lower part, while the upper part pivots with respect to the lower part around a transverse axis, such that tilt and roll can be accommodated.

Usually, the upper structure is rotated with respect to the upper part around a vertical axis.

### Problem

The prior art mechanisms for tilting an upper structure of an off-road vehicle with respect to the chassis thus allow to move the upper structure around two orthogonal axes to adjust the upper structure for roll and tilt of the ground. The height of the upper structure (in the vertical direction) is however not variable.

It is an object of the present invention to overcome or at least reduce this disadvantage.

### Summary

A mechanism for movably mounting an upper structure of an off-road vehicle with respect to a chassis of the off-road vehicle comprises:
a first part connectable or connected to the chassis or to the upper structure,
a second part connectable or connected to the upper structure or to the chassis,
a first linear actuator connected by spherical joints to the first part and the second part, respectively and a second linear actuator connected by spherical joints to the first part and the second part, respectively, the first and second actuator spaced in a first direction,
a third linear actuator connected by spherical joints to the first part and the second part, respectively, spaced from the first and second actuator in a second direction transverse to the first direction,
a first link with a fixed length, connected between the first part and the second part, configured to pivot on a first end only around an axis extending parallel to the first direction and connected with its second end by a spherical joint,
and a second link connected to the first part and the second part, the second link restricting rotation of the second part against the first part within the plane of the first and second direction.

In other words, the mechanism comprises two parts that are movable with respect to each other by means of at least three actuators. A first part is connected to a chassis of the off-road vehicle and a second part is connected to an upper structure of the off-road vehicle (or vice versa). A first and a second linear actuator, spaced along a first direction are connected with both of their ends by means of spherical joints to both parts. A third linear actuator is also coupled on both ends by spherical joints to both parts, spaced from the first and second actuator in a second direction. Both directions thus span a plane extending in a plane of the parts, and the first and second actuator move one of the parts around an axis extending parallel to the second direction, while the third actuator moves this part around an axis extending parallel to the first direction.

The actuators transfer generally only vertical loads between the two parts, while horizontal loads are transferred between both parts by a first and a second link. The first link has a fixed length (i.e., is rigid, not telescoping or articulated) and is pivoted on one of the parts around an axis extending in the first direction and supported on the other part by a spherical joint. This means that the other part rotates around the mentioned axis extending in the first direction but is not movable (at the spherical joint) in the first direction. The second link is adapted to prevent both parts from rotation in the plane defined by the first and second directions, i.e., around the vertical axis. This can be achieved when the second link has a fixed length and is connected to the first and second part by respective spherical joints at positions spaced in the first direction.

The actuators thus can pivot one of the parts with respect to the other part around the two axes, which preferably are orthogonal to each other. If only one actuator is changing its length, the parts pivot around the first or second axis, and if the actuators change their length in unison and in the same direction, the vertical distance between the parts is changing. The described mechanism thus is not only suitable for tilting one part with respect to two different axes, but also adapted to change the (vertical) distance between both parts, i.e. to change the height of the movable part and thus of the upper structure. As mentioned, the vertical loads are transferred by the actuators and horizontal loads are transferred by the links.

Preferably, a fourth actuator is connected by spherical joints between the first part and the second part, the fourth actuator spaced from the third actuator in the first direction and from the first and second actuator in the second direction.

The first link can be connected to the second part at a position at the center between the spherical joints mounting the first and second actuator to the second part. The first link can be connected to the first part at a position between the spherical joints mounting the third and fourth actuator to the first part.

The second or first part can comprise a support element for the upper structure, the support element being rotatably mounted on the second or first part around a vertical axis by a rotation actuator.

The mechanism can comprise stops limiting axial movement of the support element with respect to the second or first part.

The first direction can be transverse to a forward direction of the vehicle and the second direction can extend in the forward direction of the vehicle.

A control arrangement can be connected to the actuators and configured to control at least of the linear actuators to move to control the inclination angle of the upper structure around an axis parallel to the first direction, to control two of the linear actuators to move in opposite directions to control the inclination angle of the upper structure around an axis parallel to the second direction and to control the linear actuators jointly to change the height of the upper structure. The control arrangement can be configured to compensate a rotation of the upper structure around the vertical axis caused by movement of at least one linear actuator and the geometry of the second link by controlling the rotation actuator.

Stops can be provided between the first and second parts, assigned to the linear actuators and restricting the movement range of the actuators. The stops can comprise a slot interacting with a pin.

The actuators can be hydraulic cylinders and connected or connectable to respective accumulators for dampening the upper structure. A cross section of the connection between the cylinders and the accumulators can be variable.

The described mechanism can be used on any type of off-road vehicle, like construction, agricultural or forestry vehicles like a harvester or a forwarder. The upper structure can comprise or consist of an operator cabin.

### Embodimen

An embodiment of the invention is shown in the drawings, in which:
- Fig. 1: is a schematical view of an off-road vehicle with a chassis and an upper structure in the form of a cabin,
- Fig. 2: is a lateral view of a mechanism for movably mounting the upper structure to the chassis of the off-road vehicle of Fig. 1;
- Fig. 3: is a lateral view of the mechanism of Fig. 2, however having a smaller height,
- Fig. 4: is a perspective, explosion view of the mechanism of Fig. 3,
- Fig. 5: is a lateral view of the mechanism of Fig. 3 pivoted to the rear,
- Fig. 6: is a lateral view of the mechanism of Fig. 3 pivoted to the front,
- Fig. 7: is a rear view of the mechanism of Fig. 3 pivoted to the left,
- Fig. 8: is a rear view of the mechanism of Fig. 3 pivoted to the right,
- Fig. 9: is a lateral view of the mechanism of Fig. 3 shifted upwards,
- Fig. 10: is a lateral view of the mechanism of Fig. 3 shifted down,
- Fig. 11: is a schematic diagram of the control arrangement of the actuators of the mechanism, and
- Fig. 12: is a diagram.showing details of the hydraulic control of the linear actuators.

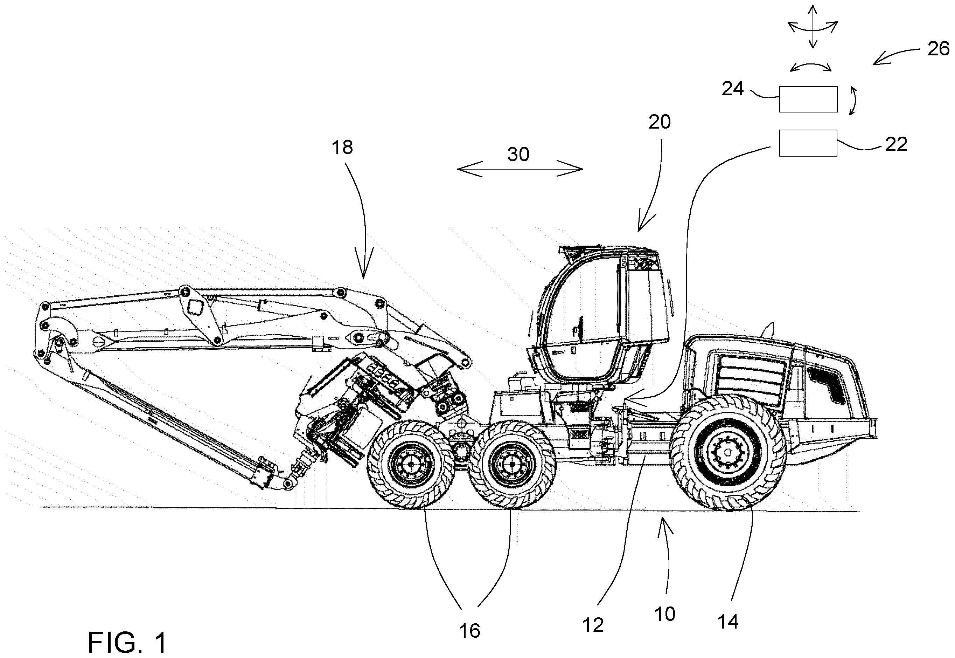

Reference is now made to Fig. 1, in which an off-road vehicle 10 is shown. The off-road vehicle 10 comprises an articulated chassis 12, supported on ground engaging means in the form of driven rear wheels 14 and front wheels 16. The chassis 12 supports on its front end a boom 18 with a harvester head for processing (felling, debarking, cutting) trees. The chassis 12 also supports an upper structure of the off-road vehicle 10 in the form of an operator cabin 20. The cabin 20 is mounted to the chassis 12 by a mechanism 26 that movably mounts the upper structure, i.e., the cabin 20, with respect to the chassis 12 of the off-road vehicle 10.

In the embodiment shown, the off-road vehicle 10 is thus a forestry vehicle in the form of a harvester, but it should be noted that the mechanism described herein is also suited for other types of vehicles, like construction or agricultural machines or other types of forestry machines, like forwarders. The upper structure is described here as (solely) the cabin 20 but could also or additionally comprise or consist of other parts, for example the boom 18.

Since the off-road vehicle 10 operates on uneven ground that can comprise obstacles and pits in the ground, the cabin 20 is supported on the chassis 12 in a movable (adjustable) manner such that the cabin 20 can keep in a horizontal position with respect to gravitation. The mechanism 26 comprises a first part 22 which is connected to the chassis 12 or is a part thereof and a second part 24 which is connected to the cabin 20 or a part thereof. The mechanism 26, shown in the following Figures and described in detail hereinafter, thus is arranged to tilt the second part 24 around two axes, one of which extending in the forward direction of the off-road vehicle 10 and one in the lateral direction of the off-road vehicle 10, and to rotate the cabin 20 around the vertical axis, allowing the operator in the cabin 20 (or an automatic control) to rotate the cabin 20 towards a region of interest. Further on, the mechanism 26 is adapted to adjust the vertical position of the second part 24.

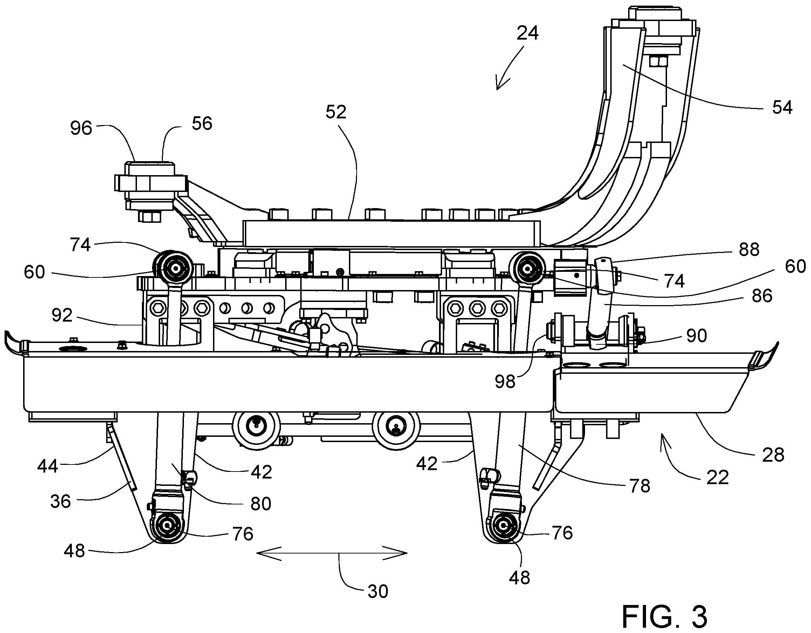

If used on a different type of vehicle, for example on a forestry forwarder instead of a harvester, the first part 22 could be replaced with a different first part 22 (as shown in Fig. 3 for a forwarder) adapted to the particular chassis of the vehicle, while the rest of the mechanism 26 would be the same as shown herein.

It should be noted that in the following Figures, the second part 24 is the upper part mounted to the upper structure in the form of the cabin 20 while the first part 22 is the lower part mounted to the chassis 12, but the positions of both can be exchanged such that the first part 22 could be the upper part and the second part 24 could be the lower part.

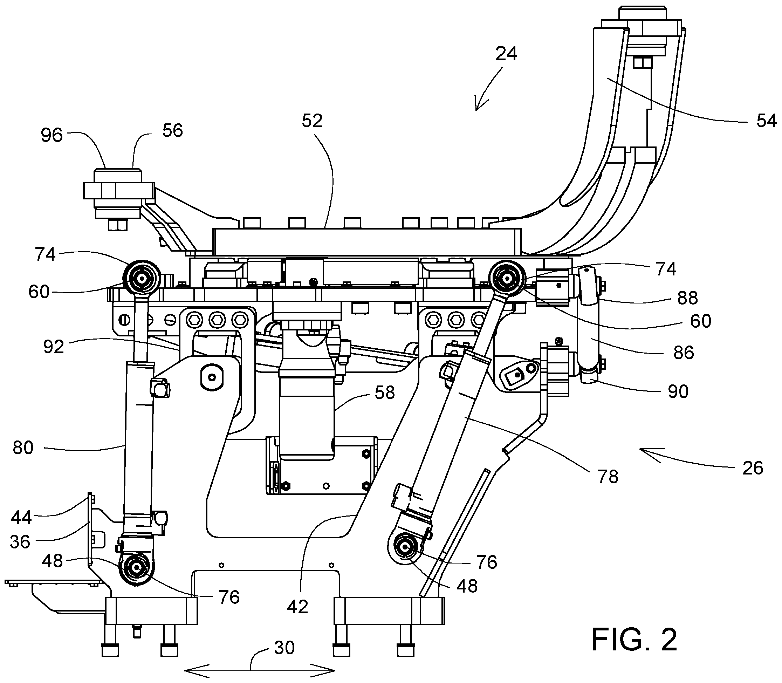

The Figures 2 to 10 show the mechanism 26 in more detail, Fig. 2 in a lateral view and Fig. 3 in a perspective, exploded view.

The first part 22 comprises a rectangular, frame-like assembly 28 arranged in a horizontal plane with edges that extend along a first, transverse direction 32 and a second, longitudinal direction 30, which directions 30, 32 correspond to the lateral and forward direction of the vehicle 10. The assembly 28 comprises four mounting assemblies 34, 36, 38, while the fourth mounting assembly 40 is hidden and thus not visible in some of the Figures. These mounting assemblies 36-40 are arranged in a rectangular pattern and spaced in the first direction 30 and second direction 32. The mounting assemblies 34-40 are located in the vicinity of the lateral edges of the assembly 28.

The mounting assemblies 34-40 each comprise two hangers 42, 44 spaced in the lateral direction and connected by upper pins 46 and lower pins 48. The lower pins 48 are thus mounted beneath the plane spanned by assembly 28 in directions 30, 32. The lower pins 48 extend horizontally and outwards from the outer hangers 42 in the first, lateral direction 32.

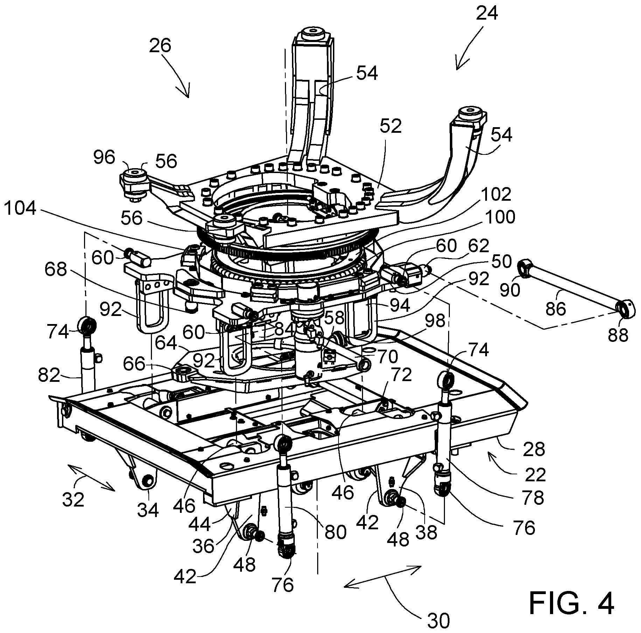

The second part 24 comprises a rectangular mounting plate 50 with a generally rectangular shape and arranged in the horizontal plane spanned by directions 30, 32. On the mounting plate 50 an upper, ring-shaped support element 52 is mounted to be rotatable around the vertical axis with respect to the mounting plate 50 by an actuator 58, which is preferably a hydraulic motor, allowing to rotate the cabin 20 around the vertical axis. The cabin 20 is mounted on four support elements 54, 56 that are fixed to the upper support element 52 and extend outwardly and upwardly therefrom. Between the support elements 54, 56 and the cabin 20, elastomeric elements 96 are provided. Further details on how the support element 52 is mounted on the mounting plate 50 by ball bearings 100 held by a cage 102 can be seen in Fig. 4.

On the four corners of the mounting plate 50, laterally extending pins 60 are provided. Another pin 62 extends on the rear side of the mounting plate 50 in the second direction 30, i.e., towards the rear. Further, at the forward end of the mounting plate 50, in the first direction in the center, another mounting pin holding a spherical joint 68 extend downwards.

A mechanical connection between the first and second parts 22, 24 is provided by a first link 64 and a second link 86. The first link 64 is provided in the form of a plate with a central hole accommodating the actuator 58. The first link is located in the vertical direction between the assembly 28 and the mounting plate 50, i.e., between the first and second part 22, 24 and extends between a forward end 66 holding mounting means for the spherical joint 68 and a rear end 70 extending in the first direction 32. The rear end 70 is pivotally connected to pins 72 at both sides of the assembly 28. These pins 72 are mounted on the upper end of rear inner hangers 46. Thus, the first link 64 allows the center of the second part 24 to pivot to both sides around an axis extending in the second direction 30 (around the spherical bearing 68) and to move on a circle around the axis of the pins 72 which extends in the first direction 32.

The second link 86 is a rigid rod mounted by respective spherical bearings 88, 90 to the rear pin 62 of the mounting plate 50 and to a pin 98 mounted on assembly 28. The pins 62 and 98 are on opposite lateral ends of the mechanism 26 and thus spaced in the first direction. Pin 98 extends, like pin 62 in the second direction towards the rear. The second link 86 restricts movement of the second part 24 around the vertical axis and thus prevents the second part from moving in the first direction. When the second part 24 moves vertically, there is a limited rotation thereof around the vertical axis due to the geometry of the second link 86 that can be compensated by control of actuator 58.

For position adjustment of the second part 24, in total four linear actuators 74, 76, 78 and 80 in the form of hydraulic cylinders are provided. The actuators 74-80 are mounted by lower spherical bearings 76 and upper spherical bearings 74 to the pins 48 of the lower part 22 and to the pins 60 of the upper part 24. The possible vertical movement range of the actuators 74-80 is restricted by stops 92 with slots 94 into which the upper pins 46 on the lower part 22 engage, to provide a roll-over protection structure (ROPS). Further stops 104 are provided between the mounting plate 50 and the support element 52 to limit axial movement of the support ring 50 with respect to the mounting plate 50.

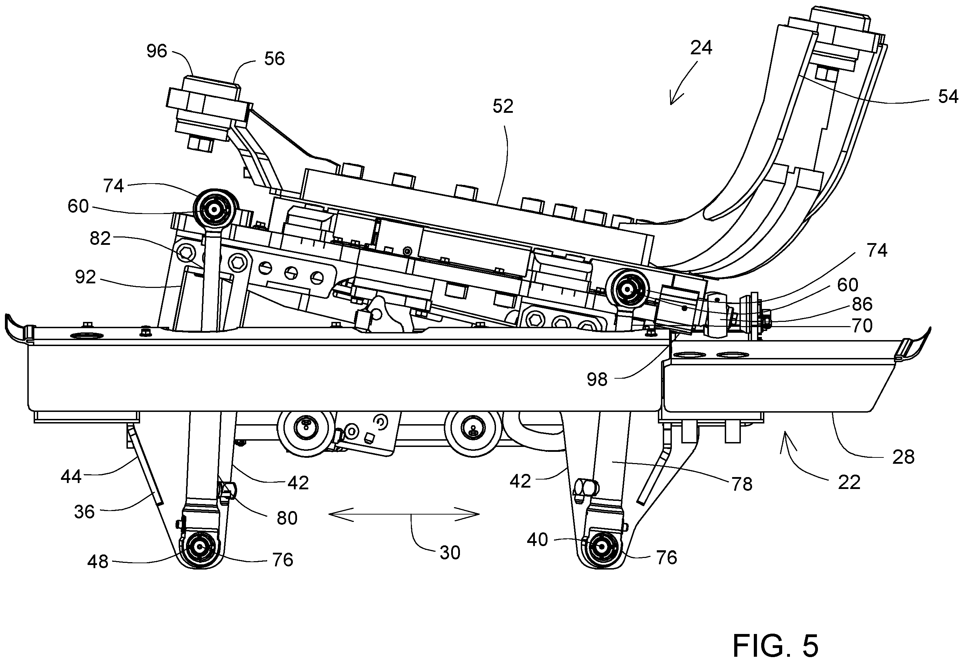

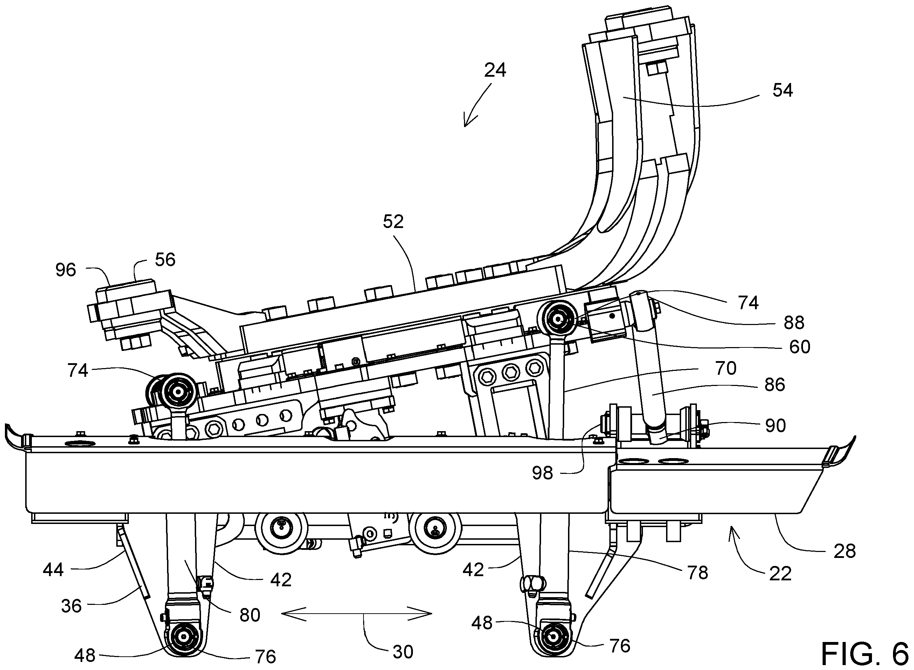

The mechanism 26 allows to tilt the upper part 24 to the front and rear, as shown in Fig. 5 and 6, by actuating the front actuators 80, 82 and/or the rear actuators 78, 84. Thereby, the front end of upper part 24 rotates around an axis extending in the first direction 32 around pins 72, when the front actuators 80, 82 are moving. If the rear actuators 78, 84 are actuated, the front end of the upper part 24 arounds an axis extending in the first direction 32 around the spherical bearing 68.

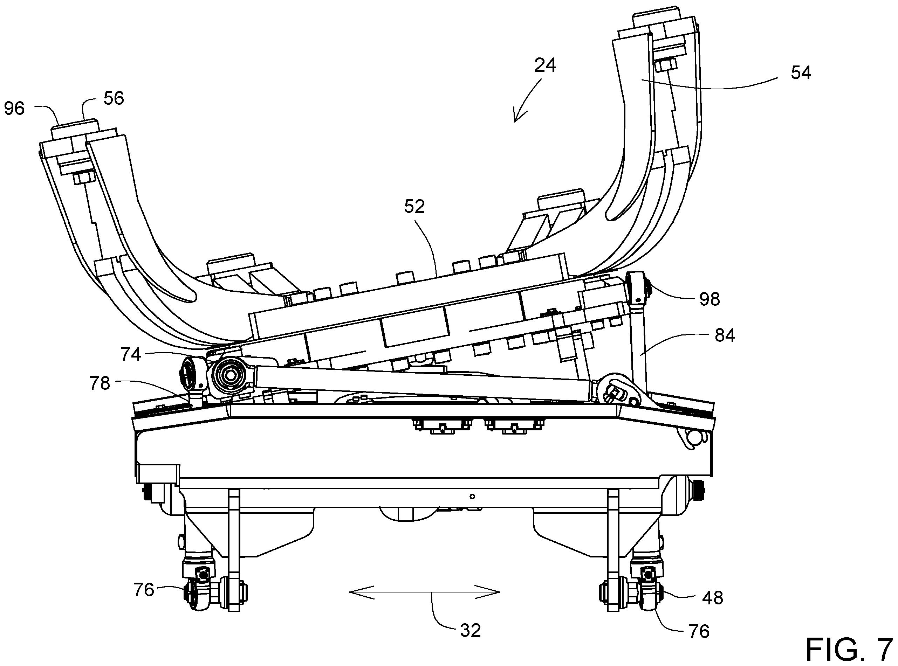

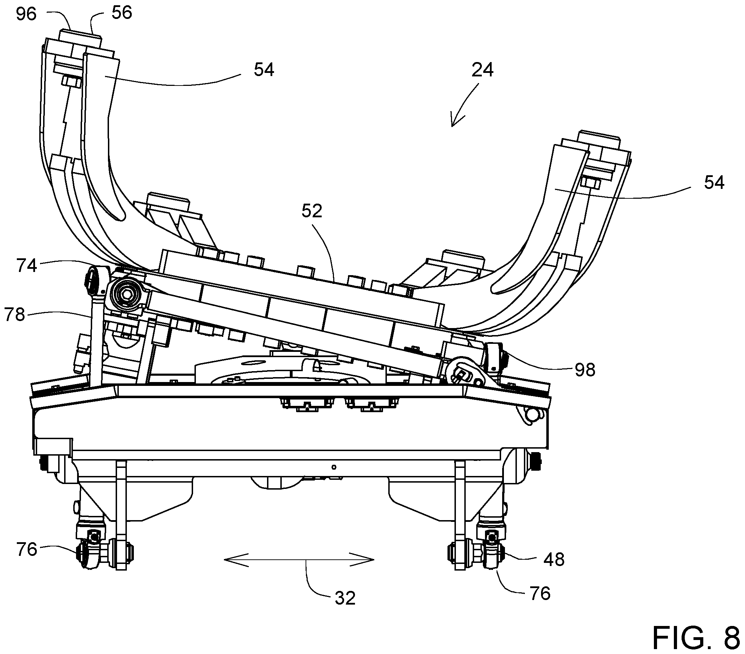

As shown in Fig. 7 and 8, it is also possible to actuate the left actuators 78, 80 and/or the right actuators 82, 84 to tilt the upper part 24 to the left and right side. The upper part 24 then rotates around an axis extending in the second direction around the spherical bearing 68.

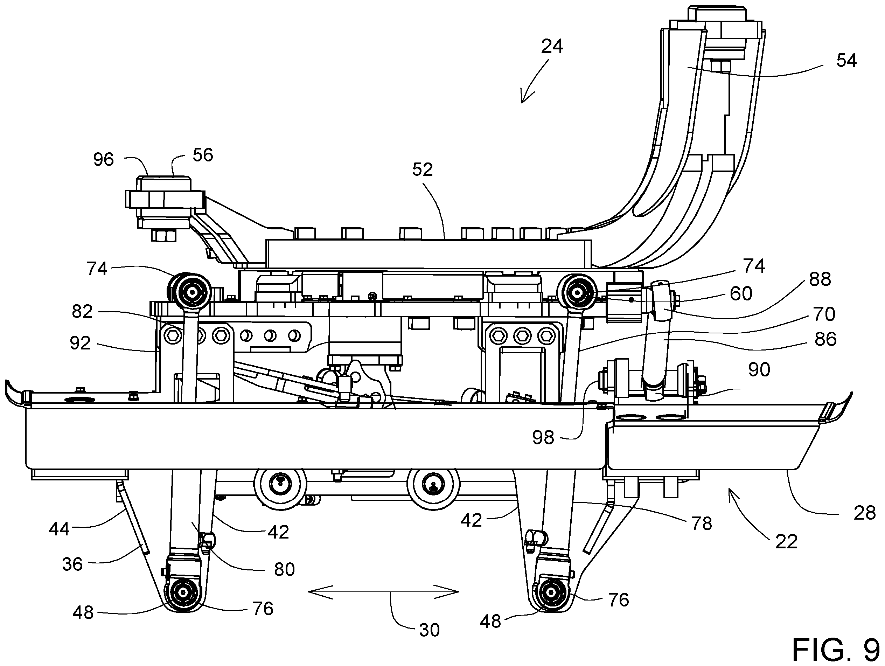

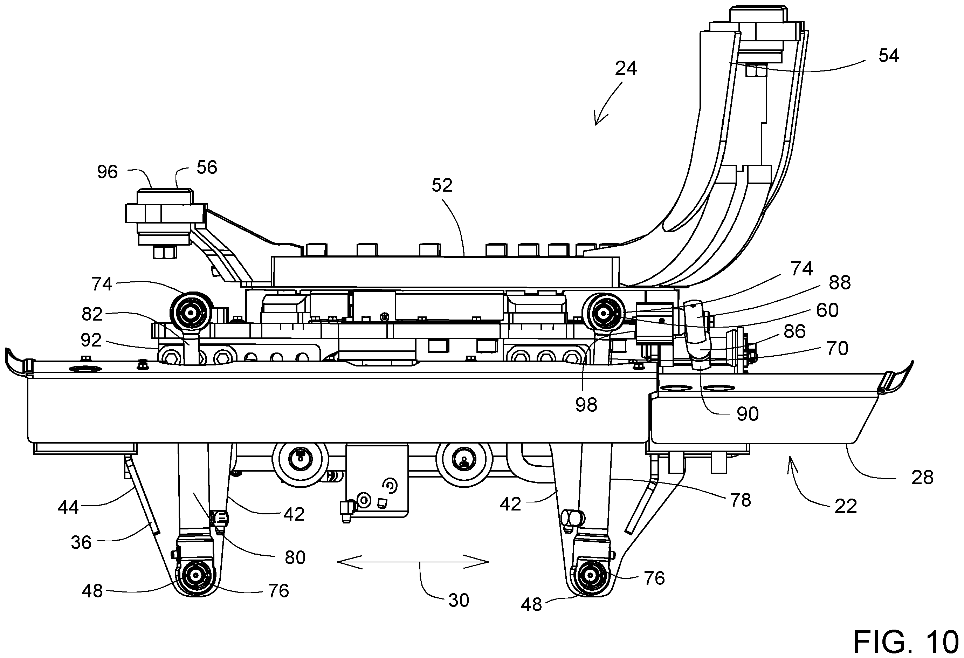

As shown in Fig. 9 and 10, it is also possible to actuate all actuators 78-84 in unison to lift or lower the upper part 24.

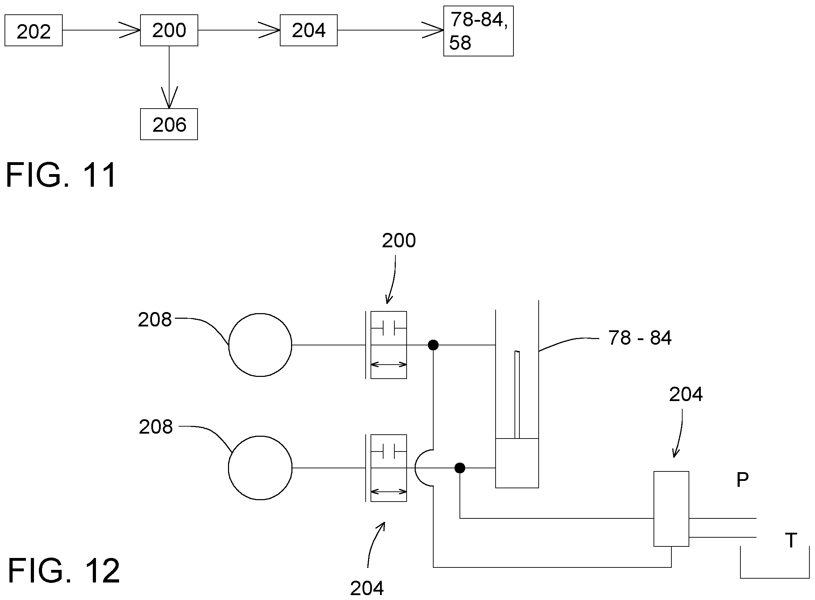

In Fig. 11 and 12, some details on a possible control unit 200 for the actuators 78-84, 58 is shown. The control unit 200 is connected to a user interface 206 and to sensors 202. The user interface 206 enables an operator in cabin 20 to enter a desired orientation of the cabin 20 around the vertical axis, such that the operator can move the cabin 20 into a direction of interest, for example to view a tree for processing. Sensors 202 detect the orientation of chassis 12 in the forward and lateral directions 32, 30 and the electronic control unit 200 sends control signals to an electrohydraulic valve assembly 204 providing hydraulic pressure to actuators 78-84 and 58. These sensors 202 can be connected to the electronic control unit 200 by a CAN bus or another bus system, and also be used for controlling actuators (not shown) moving the boom 18, be it by control unit 200 or another controller. Actuator 58 can be controlled based on operator input provided via the user interface 206. The actuators 78-84 can thus be controlled based on the signals from the sensors 202 to keep the cabin 20 in a horizontal direction. Alternatively, or additionally, an automatic control of the actuators 78-84 and 58 is possible, such that the cabin 20 is automatically lifted up when trees are unloaded from the loadspace of a forwarder or to rotate and/or tilt the cabin 20 towards a grapple of a forwarder if needed. It is also possible to control the angles of the cabin 20 depending on the environment, for example whether on a flat ground or on a steep hill.

In Fig. 12, a possible valve assembly 204 for the linear actuators 78-84 is shown (each actuator 78-84) has its own valve assembly 204). The valve assembly 204 comprises pneumatic reservoirs 208 connected via proportional valves to the rod and bottom chambers of the double-acting linear actuators 78-84, allowing to adjust the dampening of the actuators 78-84 provided for the cabin 20, preferably adjustable by the operator via interface 206. In a simpler embodiment, the proportional valves could be replaced by fixed-size orifices. The hydraulic arrangement also comprises another valve connecting the chambers of the double-acting linear actuators 78-84 to a pump P or to a tank T to control the position of the of the double-acting linear actuators 78-84.

## Claims

1. A mechanism (26) for movably mounting an upper structure of an off-road vehicle (10) with respect to a chassis (12) of the off-road vehicle (10), comprising:
a first part (22) connectable or connected to the chassis (12) or to the upper structure,
a second part (24) connectable or connected to the upper structure or to the chassis (12),
a first linear actuator (82) connected by spherical joints 74, 76) to the first part (22) and the second part (24), respectively and a second linear actuator (80) connected by spherical joints (74, 76) to the first part (22) and the second part (24), respectively, the first and second actuator (82, 80) spaced in a first direction (32),
a third linear actuator (78) connected by spherical joints (74, 76) to the first part (22) and the second part (24), respectively, spaced from the first and second actuator (82, 80) in a second direction (30) transverse to the first direction (32),
a first link (64) with a fixed length, connected between the first part (22) and the second part (24), configured to pivot on a first end (70) only around an axis extending parallel to the first direction (32) and connected with its second end by a spherical joint (68),
and a second link (86) connected to the first part (22) and the second part (24), the second link (86) restricting rotation of the second part (24) against the first part (22) within the plane spanned by the first and second direction (32, 30).

2. The mechanism (26) of claim 1, wherein the second link (86) has a fixed length and is connected to the first and second part (22, 24) by respective spherical joints (88, 90) at positions spaced in the first direction (32).

3. The mechanism (26) of claim 1 or 2, comprising a fourth actuator (84) connected by spherical joints (74, 76) between the first part (22) and the second part (24), the fourth actuator (84) spaced from the third actuator (78) in the first direction (32) and from the first and second actuator (82, 80) in the second direction (32).

4. The mechanism (26) of one of claims 1 to 3, wherein the first link (64) is connected to the second part (24) at a position at the center between the spherical joints (74) mounting the first and second actuator (82, 80) to the second part (24).

5. The mechanism (26) of claim 4, wherein the first link (64) is connected to the first part (22) at a position between the spherical joints (76) mounting the third and fourth actuator (78, 84) to the first part (24).

6. The mechanism (26) of one of the preceding claims, wherein the second (24) or first part (22) comprises a support element (52) for the upper structure, the support element (52) being rotatably mounted on the second or first part (24, 22) around a vertical axis by a rotation actuator (58).

7. The mechanism (26) of claim 6, comprising stops (104) limiting axial movement of the support element (52) with respect to the second or first part (24, 22).

8. The mechanism (26) of one of the preceding claims, wherein the first direction (32) is transverse to a forward direction of the vehicle (10) and the second direction (30) extends in the forward direction of the vehicle (10).

9. The mechanism (26) of one of the preceding claims, with a control arrangement connected to the actuators (78-84, 58) and configured to control at least two of the linear actuators (78-84) to move jointly to control the inclination angle of the upper structure around an axis parallel to the first direction (32), to control at least two of the linear actuators (78-84) to move in opposite directions to control the inclination angle of the upper structure around an axis parallel to the second direction (30) and to control the linear actuators (78-84) jointly to change the height of the upper structure.

10. The mechanism (26) of claim 9, when appended to claim 2 and 6, wherein the control arrangement is configured to compensate a rotation of the upper structure around the vertical axis caused by movement of at least one linear actuator (78-84) and the geometry of the second link (86) by controlling the rotation actuator (58).

11. The mechanism (26) of one of the preceding claims, comprising stops (92) between the first and second parts (22, 24), assigned to the linear actuators (78-84) and restricting the movement range of the actuators (78-84).

12. The mechanism (26) of claim 11, wherein the stops (92) comprise a slot (94) interacting with a pin (46).

13. The mechanism (26) of one of the preceding claims, wherein the actuators (78-84) are hydraulic cylinders and connected or connectable to respective pneumatic reservoirs (208) for dampening the upper structure.

14. The mechanism (26) of claim 13, wherein a cross section of the connection between the cylinders and the pneumatic reservoirs (208) is variable.

15. An off-road vehicle (10), in particular a forestry vehicle like a harvester or a forwarder with a mechanism (26) according to one of the preceding claims, wherein the upper structure comprises or consists of an operator cabin (20).

## Amended claims

### Amended claims in accordance with Rule 137(2) EPC.

1. A mechanism (26) for movably mounting an upper structure of an off-road vehicle (10) with respect to a chassis (12) of the off-road vehicle (10), comprising:
a first part (22) connected to the chassis (12) or to the upper structure,
a second part (24) connected to the upper structure or to the chassis (12),
a first linear actuator (82) connected by spherical joints 74, 76) to the first part (22) and the second part (24), respectively and a second linear actuator (80) connected by spherical joints (74, 76) to the first part (22) and the second part (24), respectively, the first and second actuator (82, 80) spaced in a first direction (32),
a third linear actuator (78) connected by spherical joints (74, 76) to the first part (22) and the second part (24), respectively, spaced from the first and second actuator (82, 80) in a second direction (30) transverse to the first direction (32),
a first link (64) with a fixed length, connected between the first part (22) and the second part (24),
**characterized in that** the first link (64) is configured to pivot on a first end (70) only around an axis extending parallel to the first direction (32) and connected with its second end by a spherical joint (68), such that the first link (64) is pivoted on one of the parts (22, 24) around the axis extending in the first direction (32) and supported on the other part (24, 24) by the spherical joint (68),
and that a second link (86) is connected to the first part (22) and the second part (24), the second link (86) restricting rotation of the second part (24) against the first part (22) within the plane spanned by the first and second direction (32, 30).

2. The mechanism (26) of claim 1, wherein the second link (86) has a fixed length and is connected to the first and second part (22, 24) by respective spherical joints (88, 90) at positions spaced in the first direction (32).

3. The mechanism (26) of claim 1 or 2, comprising a fourth actuator (84) connected by spherical joints (74, 76) between the first part (22) and the second part (24), the fourth actuator (84) spaced from the third actuator (78) in the first direction (32) and from the first and second actuator (82, 80) in the second direction (32).

4. The mechanism (26) of one of claims 1 to 3, wherein the first link (64) is connected to the second part (24) at a position at the center between the spherical joints (74) mounting the first and second actuator (82, 80) to the second part (24).

5. The mechanism (26) of claim 4, wherein the first link (64) is connected to the first part (22) at a position between the spherical joints (76) mounting the third and fourth actuator (78, 84) to the first part (24).

6. The mechanism (26) of one of the preceding claims, wherein the second (24) or first part (22) comprises a support element (52) for the upper structure, the support element (52) being rotatably mounted on the second or first part (24, 22) around a vertical axis by a rotation actuator (58).

7. The mechanism (26) of claim 6, comprising stops (104) limiting axial movement of the support element (52) with respect to the second or first part (24, 22).

8. The mechanism (26) of one of the preceding claims, wherein the first direction (32) is transverse to a forward direction of the vehicle (10) and the second direction (30) extends in the forward direction of the vehicle (10).

9. The mechanism (26) of one of the preceding claims, with a control arrangement connected to the actuators (78-84, 58) and configured to control at least two of the linear actuators (78-84) to move jointly to control the inclination angle of the upper structure around an axis parallel to the first direction (32), to control at least two of the linear actuators (78-84) to move in opposite directions to control the inclination angle of the upper structure around an axis parallel to the second direction (30) and to control the linear actuators (78-84) jointly to change the height of the upper structure.

10. The mechanism (26) of claim 9, when appended to claim 2 and 6, wherein the control arrangement is configured to compensate a rotation of the upper structure around the vertical axis caused by movement of at least one linear actuator (78-84) and the geometry of the second link (86) by controlling the rotation actuator (58).

11. The mechanism (26) of one of the preceding claims, comprising stops (92) between the first and second parts (22, 24), assigned to the linear actuators (78-84) and restricting the movement range of the actuators (78-84).

12. The mechanism (26) of claim 11, wherein the stops (92) comprise a slot (94) interacting with a pin (46).

13. The mechanism (26) of one of the preceding claims, wherein the actuators (78-84) are hydraulic cylinders and connected or connectable to respective pneumatic reservoirs (208) for dampening the upper structure.

14. The mechanism (26) of claim 13, wherein a cross section of the connection between the cylinders and the pneumatic reservoirs (208) is variable.

15. An off-road vehicle (10), in particular a forestry vehicle like a harvester or a forwarder with a mechanism (26) according to one of the preceding claims, wherein the upper structure comprises or consists of an operator cabin (20).
